# EUROPEAN PATENT APPLICATION

(11) **EP 2 988 436 A1**
(43) Date of publication of application: **24.02.2016**
(21) Application number: 14290252.7
(22) Date of filing: 19.08.2014
(51) Int. Cl.: H04J 3/16

(54) **Method to operate a network unit and network unit**

(71) Applicant: ALCATEL LUCENT, 92100 Boulogne-Billancourt (FR)
(72) Inventor: Zottmann, Andreas, 90411 Nürnberg (DE); Roessel, Wolfgang, 90411 Nürnberg (DE)
(74) Representative: DREISS Patentanwälte PartG mbB

(57) **Abstract**

It is proposed method to operate a network unit of an Optical Transport Network, OTN, wherein a subset (2) of an Optical Channel frame (4) is generated, and wherein the subset (2) is transmitted via an Optical Channel, OCh, over an optical fiber link (6).

## Description

### Field of the invention

The invention relates to a method to operate a network unit and the network unit.

### Background

OTUk, Optical Transport Unit k, bit rates according to ITU-T G.709 are nearly constant, wherein the bit-rate tolerance is ±20 ppm. Moreover, OTUk bit rates are fixed. Currently G.709 has defined bit rates of 1.3, 2.7, 10.7, 43 and 112 Gbps.

On the other hand optical connections through optical fibers provide bit rates different to the OTUk bit rates above.

Moreover, because replacing existing optical fibers is usually costly there is an increased demand on optimizing specific fibers in use, i.e. get the best achievable bandwidth at a given distance and fiber quality.

Even steps of multiple 100Gbps, for example with two optical fibers, are too coarse to adapt the optical transmission.

As a basic example the very commonly used modulation formats DP-QPSK, dual polarization state phase modulation, and DP-16QAM, dual polarization 16 quadrature amplitude modulation, can be used. Assuming a given carrier spacing and a target bit rate of 100Gbps for DP-QPSK, DP-16QAM would allow for twice the data rate, i.e. 200Gbps, while keeping the carrier spacing, which defines the overall maximum achievable bandwidth of a fiber. Given a specific coherent implementation the achievable distances between those two modulation formats varies dramatically, e.g. while DP-QPSK might achieve a maximum of 2000 km, DP-16QAM might be limited to 500 km and less. If the task is now to optimize the bandwidth of such a fiber with a length of around 1000-1500 km, the gap of the existing solutions becomes obvious. In the optical domain advanced modulation formats have been invented to fill this gap, while OTN does not provide any intermediate speeds between e.g. 100 and 200 Gbps.

Assuming a specific example of 80 carriers at a spacing of 50GHz and an existing solution employing DP-QPSK with 100Gbps per carrier, and assuming an available optical modulation format allowing for e.g. 160 Gbps per carrier on the same fiber, the overall bandwidth gap would accumulate to almost 5Tbps on this specific fiber if one would be required to stick to client rates based on multiples of 100 Gbps.

### Summary

In view of the prior art, it is an object of the present disclosure to adapt flexible bit rates provided by the optical fiber domain to the OTUk domain.

Therefore, it is proposed a method to operate a first network unit of an Optical Transport Network, OTN, wherein a first subset of an Optical Channel frame is generated, and wherein the subset is transmitted via an Optical Channel, OCh, over an optical fiber link.

Moreover, on the receiver side it is proposed a method to operate a second network unit of the Optical Transport Network, wherein a second subset of an Optical Channel frame is received, and wherein the frame is reconstructed from the subset.

This allows to attend the OTUk domain of the respective network nodes with an optical fiber link and a respective modulation scheme, wherein the optical domain provides an effective bit rate lower than the actual OTUk domain. With this solution even multiples of OTUk bit rates can be attended with a respectively lower optical domain bit rate.

This disclosure advantageously focusses on the issue of having a multiple of defined rates (e.g. 2*OTU4) at an ingress interface that does not match the optimum optical transmission rate and format (e.g. 150G) by removing and replacing OTUk/ODUk frame parts in the form of the subsets. In this way a plurality of mapping schemes can be applied.

According to an embodiment the subset is generated by omitting a second part of the OTUk frame payload and/or of the Optical Data Unit, ODUk, frame payload and/or of the Optical channel Payload Unit, OPUk, frame payload. As the OTUk frame is preferably pre-configured in the OTN, the respective second part is not used or semantically processed by any of the network units of the OTN.

According to an embodiment the position and/or size of the omitted second part is transmitted together with the subset in the subset and/or in a respective overhead of the subset.

According to an alternative embodiment the position and/or the size of the omitted second part is pre-configured.

According to an embodiment an OTUk rate is essentially maintained for the transmission of the subset of the OTUk frame.

According to an embodiment the subset of the OTUk frame comprises a first part of the OTUk frame payload and/or of the Optical Data Unit, ODUk, frame payload and/or of the Optical channel Payload Unit, OPUk, frame payload.

According to an embodiment the second part of the OTUk frame payload and/or of the Optical Data Unit, ODUk, frame payload and/or of the Optical channel Payload Unit, OPUk, frame payload is filled with zeros or any other kind of known value.

According to an embodiment the position and/or size of the omitted second part is received together with the subset in the subset and/or in a respective overhead of the subset.

According to an embodiment an OTUk rate is maintained for the reception of the subset of the OTUk frame.

### Brief description of the figures

- Figure 1: shows a schematic depiction of a method;
- Figure 2: shows a schematic depiction of an Optical Transport Network; and
- Figure 3 and 4: show a schematic depiction of data frames, respectively.

### Description of the embodiments

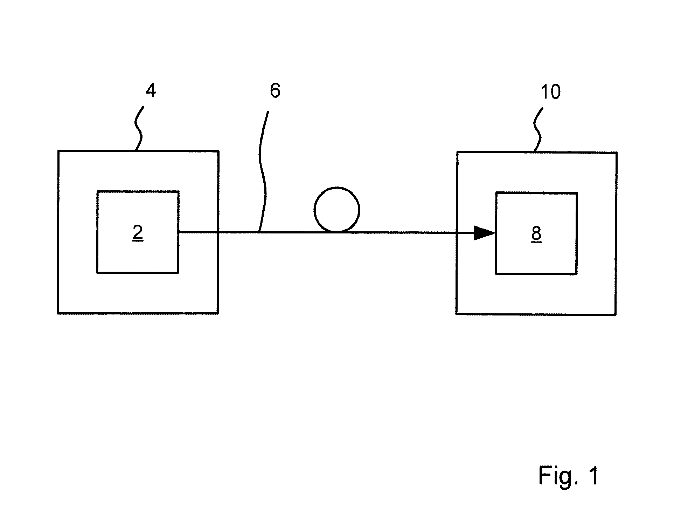

Figure 1 shows a schematic depiction of a method. A first subset 2 of a first OTUk, Optical Transport Unit, frame 4 is generated. The first subset 4 is transmitted via an Optical Channel, OCh, over an optical fiber link 6. A second subset 8 is received, wherein the first subset 4 equals the second subset 8 in one transmission/reception process. A second OTUk frame 10 is reconstructed from the second subset 8 after the reception of the subset from the OCh over the optional fiber link 6.

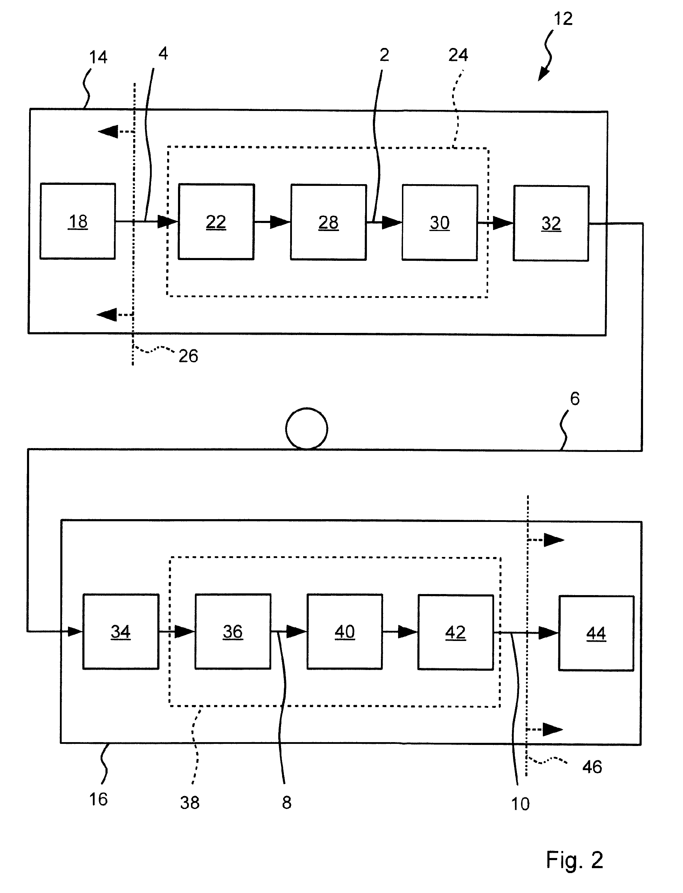

Figure 2 shows a schematic depiction of an Optical Transport Network 12, OTN, comprising a first network node 14 and a second network node 16. The network nodes 14 and 16 are interconnected by the optical fiber link 6. Of course the network units 14 and 16 may be interconnected by a plurality of optical fibers even with further network nodes in between.

The first network node 14 comprises a first OTUk component 18 which generates or outputs the first OTUk frame 4 or OTUk data, wherein OTUk data may comprise for example ODUk, Optical Data Unit, data or OPUk, Optical Payload Unit, data. The input to the first OTUk component 18 may be an ODUk stream or an OTUK stream. In one embodiment the OTUk component 18 may be a wire. The first OTUk component 18 applies the first OTUk frame 4 to an ingress unit 22 of a first electro-optical digital signal processor 24. The ingress unit 22 may comprise a plurality of OTUk framers. Therefore the first processor 24 provides an OTUk compatible ingress OTUk interface 26 to the component 18.

For an OTN according to ITU-T G.709 a 150G transport entity could be generated by using two OTU4 parallel streams and omitting five 10G (ODU2) streams. The streams are combined by TDM (e.g. bit or byte multiplex).

The interface 26 between the OTUk component 18 and the ingress unit 22 can also work on ODUk frames.

The first OTUk frame 4 is applied to a first mapping unit 28. The mapping unit 28 generates the first subset 2 of the received OTUk frame 4 and applies the subset 2 to an egress interface 30 of the processor 24. The egress interface 30 applies the first subset 2 to an optical output port 32 of the network unit 14. The first subset 2 is transmitted via an Optical Channel, OCh, over the optical fiber link 6.

In an exemplary embodiment the mapping unit 28 generates frames comprising a first part of the payload to be transmitted, wherein these frames advantageously do not need to be standard frames. Therefore a first logical stream comprises the transmission of the subset 2. The subset 2 comprises the first part of the payload to be transmitted. A second logical stream comprises the transmission of a second part of the payload to be transmitted, wherein the frames of the second logical stream advantageously do not need to be standard frames. The first logical stream is transmitted parallel to the second stream over the optical fiber link 6. The same applies for the reception. An example would be the transmission of two 100G signals received the ingress unit 22, wherein only 75% of the payload of the 100G signals is transmitted. As 25% of the payloads of the 100G signals are omitted for the transmission over the optical fiber link 6, only two 75G signals are effectively transmitted. Consequently, the transmission capacity in data per time unit can be adjusted to the needs outside the interfaces 26 and 46. Further, the transmission capacity can be adjusted to the available optical transport capacity over the optical fiber link 6. Moreover this disclosure does not limit the number of data streams transmitted, which may be attended by a respective mapping scheme for the units 28 and 40.

By means of an input port 34 of the second network node 16 the optical signal is received from the first network node 14 and applied to an ingress interface 36 of a second optical-electro digital signal processor 38. The ingress interface 36 applies the second subset 8, which has the equivalent content of the first subset 2, to the second mapping unit 40. The second mapping unit 40 reconstructs the second OTUk frame 10 from the second subset 8, wherein the second OTUk frame is applied by the egress interface 42 of the second processor 38 to the second OTUk component 44. The second processor 38 provides an egress OTUk compatible interface 46 to the OTUk component 44.

Due to the mapping units 28 and 40 standardized components 18 and 44 can be used while providing the maximum data throughput through the optical fiber 6 to the OTUk domain. In its simplest form the components 18 and 44 are just wires.

Of course more message entities than the first subset 4 may be applied to the ingress unit 22. Also more message entities than the second subset 8 may be determined by the egress interface 42. Also more than one channel may be transported via the optical fiber link 6. Consequently, the amount of parallel OTUk interfaces at the ingress unit 22 and also the amount of parallel OTUk interfaces at the egress interface 42 is independent of the number of parallel channels on the optical fiber link 6. Therefore the mapping units 28 serve to advantageously decouple the optical domain from the OTUk domain.

Of course, a signal to be transmitted from the first network unit 14 to the second network unit 16 via the first subset 2 or a plurality of subsets 2 can be multiplexed to a plurality of optical fiber links 6. The first and second network units 14, 16 are adapted according to this multiplexing embodiment.

In an embodiment there is a first number of ingress interfaces entering the ingress unit 22 is equivalent to a second number of egress interfaces leaving the egress unit 42. In a different embodiment the mapping unit 28 combines parallel streams such that the parallelism at 2 is different from that at 4. Generally speaking one optical channel (i.e. one wave length / one colour) can contain one or several data streams either by means of direct TDM (e.g. bit or byte multiplex) or by mapping those streams into a new higher order stream (e.g. OTN like). It would also be possible to split a single logical stream at 2 onto several optical channels.

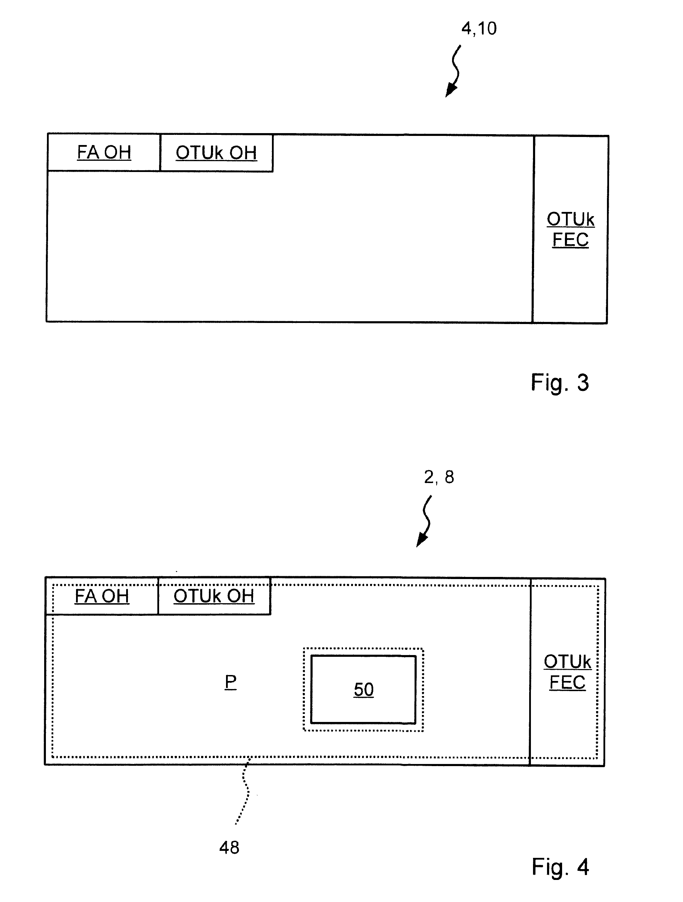

Figure 3 shows a schematic depiction of the OTUk frame 4 at the interface 26 or the OTUK frame 10 at the interface 46. The OTUk frame 4, 10 comprises a frame alignment overhead, FA OH, field, an OTUk overhead, OH, field, a payload field P, and an OTUk FEC, forward error correction, field.

Figure 4 shows a schematic depiction of the subset 2 on the output side of the mapping unit 28 or the subset 8 at the input side of the mapping unit 40. The subset 2, 8 comprises a first part of the OTUk frame 4, 10 according to the dotted line 48 and does not comprise the second part 50. Accordingly the second part 50 is not submitted through the optical fiber 6 and no time slots are used for the second part 50.

Accordingly only the subset 2 is transmitted at essentially the same OTUk rate as provided by the component 18 using less transport capacity over the optical fiber 6 according to the excavated second part 50. Furthermore, the OTUk FEC is transmitted optionally.

The OTUk rate is not equal to an OTUk bit rate and therefore not related to an amount of data transmitted in a certain period of time. The OTUk rate refers to the frequency of OTUk frames transmission and/or reception. According to this disclosure the OTUk rate also refers to the frequency the subset 2, 8 is transmitted and received, respectively. The second part 50 is characterized by an address and/or size inside the frame 4, 10. The second mapping unit 40 reconstructs the frame 10 from the subset 8 in accordance with the address and/or size, wherein the second mapping unit 40 is pre-configured accordingly and/or the second mapping unit 40 receives the respective information of the address and/or the size of the second part 50 from the first network node 14, for example in the overhead of the respective subset 8.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method to operate a network unit (14) of an Optical Transport Network (12), OTN, wherein a subset (2) of an Optical Channel frame (4), especially of an Optical Channel Transport Unit, OTUk frame or of an Optical Channel Data Unit, ODUk, frame, is generated, and wherein the subset (2) is transmitted via an Optical Channel, OCh, over an optical fiber link (6).

2. The method according to claim 1, wherein the subset (2) of the OTUk frame (4) comprises a first part (48) of the OTUk frame payload (P) and/or of the Optical Data Unit, ODUk, frame payload and/or of the Optical channel Payload Unit, OPUk, frame payload

3. The method according to claim 1, wherein the subset (2) is generated by omitting a second part (50) of an OTUk frame payload (P) and/or of an Optical Data Unit, ODUk, frame payload and/or of an Optical channel Payload Unit, OPUk, frame payload.

4. The method according to claim 3, wherein the position and/or size of the omitted second part (50) is transmitted together with the subset (2) in the subset (2) and/or in a respective overhead of the subset (2).

5. The method according to one of the preceding claims, wherein an OTUk rate is essentially maintained for the transmission of the subset (2) of the frame (4).

6. A method to operate a network unit (16) of an Optical Transport Network (12), OTN, wherein a subset (8) of an Optical Channel frame (10), especially of an Optical Channel Transport Unit, OTUk frame or of an Optical Channel Data Unit, ODUk, frame, is received, and wherein the frame (10) is reconstructed from the subset (8).

7. The method according to claim 6, wherein the subset (8) of the frame (10) comprises a first part (48) of an OTUk frame payload (P) and/or of an Optical Data Unit, ODUk, frame payload and/or of an Optical channel Payload Unit, OPUk, frame payload.

8. The method according to claim 6 or 7, wherein a second part (50) of the OTUk frame payload (P) and/or of the Optical Data Unit, ODUk, frame payload and/or of the Optical channel Payload Unit, OPUk, frame payload is filled with a pre-defined value.

9. The method according to claim 8, wherein the position and/or size of the omitted second part (50) is received together with the subset (8) in the subset (8) and/or in a respective overhead of the subset (8).

10. The method according to one of claims 6 to 9, wherein an OTUk rate is maintained for the reception of the subset (8) of the OTUk frame (10).

11. A network unit (14) of an Optical Transport Network (12), OTN, the network unit (14) operable to generate a subset (2) of an Optical Channel frame (4), especially of an Optical Channel Transport Unit, OTUk frame or of an Optical Channel Data Unit, ODUk, frame, and the network unit (14) operable to transmit the subset (2) via an Optical Channel, OCh, over an optical fiber link (6).

12. The network unit (14) of claim 11 operable to execute a method according to claims 1 to 5.

13. A network unit (16) of an Optical Transport Network (12), OTN, the network unit (16) operable to receive a subset (8) of an Optical Channel frame (10), especially of an Optical Channel Transport Unit, OTUk frame or of an Optical Channel Data Unit, ODUk, frame, and the network unit (16) operable to reconstruct an Optical Channel frame (10) from the received subset (8).

14. The network unit (16) of claim 13 operable to execute a method according to claims 6 to 10.

15. An Optical Transport Network (12), OTN, comprising a first network unit (14) according to claim 11 or 12 and a second network unit (16) according to claim 13 or 14, wherein the first network unit (14) and the second network unit (16) are connected via an optical fiber link (6).
